# EUROPÄISCHE PATENTANMELDUNG

(11) **EP 1 107 045 A2**
(43) Veröffentlichungstag der Anmeldung: **13.06.2001**
(21) Anmeldenummer: 00125900.1
(22) Anmeldetag: 27.11.2000
(51) Int. Cl.: G02F 1/133, G02F 1/1335

(54) **Anzeigeeinrichtung mit einer Flüssigkristallzelle**

(30) Priorität: 03.12.1999 DE 19958362
(71) Anmelder: Mannesmann VDO AG, 60388 Frankfurt am Main (DE)
(72) Erfinder: Brandt, Peter, 63739 Aschaffenburg (DE)
(74) Vertreter: Klein, Thomas, Dipl.-Ing. (FH)

(57) **Zusammenfassung**

Bei einer Anzeigeeinrichtung mit einer Flüssigkristallzelle (1) mit zwei Trägerscheiben (2, 3) und einer Heizvorrichtung (4) sowie zumindest einem Polfilter (6) hat der Polfilter (6) durch eine transparente Isolationsschicht (7) Abstand von der Heizvorrichtung (4). Dadurch wird eine unzulässig hohe Wärmebelastung des Polfilters (6) vermieden.

## Beschreibung

Die Erfindung betrifft eine Anzeigeeinrichtung, insbesondere in einem Kraftfahrzeug, mit einer einen Polfilter aufweisenden Flüssigkristallzelle, die eine einem Betrachter zugewandte vordere und eine hintere Trägerscheibe sowie eine in einem Zellenraum zwischen den Trägerscheiben angeordnete Flüssigkristallsubstanz aufweist, und mit einer Heizvorrichtung zur Beheizung der Flüssigkristallzelle.

Anzeigeeinrichtungen der vorstehenden Art werden beispielsweise in Kraftfahrzeugen für unterschiedliche Anzeigen häufig eingesetzt und sind deshalb allgemein bekannt. Bei niedrigen Temperaturen ist die Flüssigkristallzelle der Anzeigeeinrichtung aufgrund des dann hohen Beharrungsvermögens der Flüssigkristallsubstanz unerwünscht träge. Dadurch dauert es lange, bis bei einem Wechsel der Anzeige diese abzulesen ist. Da in Kraftfahrzeugen im Winter nach einem Start zunächst sehr niedrige Temperaturen herrschen können, ist es erforderlich, die Flüssigkristallzelle zu beheizen. Das geschieht derzeit durch eine Heizdrähte aufweisende Heizvorrichtung, wobei die Heizdrähte auf einem Polfilter der Flüssigkristallzelle aufgebracht sind. Allerdings sind der Flüssigkristallzelle zugeordnete Polfilter wärmeempfindlich, so dass ihre Lebensdauer stark abnimmt, wenn sie durch die Heizvorrichtung höheren Temperaturen ausgesetzt sind. Deshalb entsteht ein Zielkonflikt. Einerseits will man eine kalte Flüssigkristallzelle möglichst rasch aufheizen und benötigt dazu eine relativ große Heizleistung, andererseits darf man die Polfilter keiner hohen Temperaturbelastung aussetzen.

Der Erfindung liegt daher das Problem zugrunde, eine Flüssigkristallzelle der eingangs genannten Art so auszubilden, dass sie möglichst rasch aufzuheizen ist, ohne dass es zu einer unzulässig hohen Temperaturbeanspruchung des Polfilters kommt.

Dieses Problem wird erfindungsgemäß dadurch gelöst, dass die Heizvorrichtung außerhalb des Zellenraums und zwischen dem Polfilter und einer der Trägerscheiben angeordnet ist und dass der Polfilter mittels einer thermischen Isolationsschicht von der Heizvorrichtung getrennt ist.

Eine solche Isolationsschicht erlaubt eine wesentlich höhere Heizleistung der Heizvorrichtung als bei Heizvorrichtungen, die in der bisher bekannten Form unmittelbar Kontakt mit dem Polfilter haben, ohne dass der Polfilter einer unerwünscht starken Wärmebeanspruchung ausgesetzt wird. Dadurch ist eine rasche Aufheizung der Flüssigkristallzelle möglich, so dass auch nach kalten Nächten eine rasche Anzeige auf einem Flüssigkristalldisplay möglich wird. Gegenüber vergleichbaren Flüssigkristallzellen erhöht sich dank der Erfindung die Lebensdauer des Polfilters und damit der Anzeigeeinrichtung wesentlich. Dieses ist insbesondere bei in Kraftfahrzeugen eingebauten Anzeigeeinrichtungen von großer Bedeutung. Solche Anzeigeeinrichtungen, die bspw. Bestandteil eines Kombinationsanzeigeinstrumentes oder - eingebaut in die Instrumententafel oder die Mittelkonsole - eines Informationssystems sind, sollten nicht vor Ablauf der Lebensdauer des Gesamtfahrzeugs ausfallen, da ihr Austausch sehr aufwendig ist.

Die Ausnutzung des von einer Beleuchtungseinrichtung für die Flüssigkristallzelle der Anzeigeeinrichtung abgestrahlten Lichts ist besonders hoch, wenn gemäß einer vorteilhaften Weiterbildung der Erfindung die Isolationsschicht transparent ist.

Als Isolationsschicht ist beispielsweise ein Fluid oder ein starrer Körper vorstellbar. Die Anzeigeeinrichtung ist jedoch besonders kostengünstig herstellbar und erlaubt eine sehr wirkungsvolle Wärmeisolation des Polfilters gegenüber der Heizvorrichtung, wenn die Isolationsschicht durch eine Luftschicht gebildet ist.

Die wärmeisolierende Luftschicht oder ein Raum für das wärmeisolierende Fluid ergibt sich auf besonders einfache Weise, wenn gemäß einer anderen Weiterbildung der Erfindung vorzugsweise der Polfilter mit einem seitlichen Rahmen auf der Heizvorrichtung aufsitzt.

Alternativ ist es jedoch auch möglich, dass die Isolationsschicht durch eine wärmeisolierende Scheibe gebildet ist. Aufgrund niedriger Herstellungskosten und einfacher Handhabbarkeit bietet sich hier vorzugsweise eine Glasoder Kunststoffscheibe an.

Der Heizvorrichtung kann mit der Isolationsschicht als ein Bauteil gefertigt und damit auch einfach gehandhabt werden, wenn sie durch eine elektrisch leitende, der Trägerscheibe zugewandte und einen elektrischen Widerstand aufweisende Schicht auf der die Isolationsschicht bildenden, wärmeisolierenden Scheibe gebildet ist. Bei einer solchen Ausführungsform kann man problemlos Flüssigkristallzellen mit oder ohne Heizvorrichtung, die nach Bedarf einfügbar ist, ausstatten. Die Beheizung der Flüssigkristallzelle erfolgt hierbei durch die Abwärme des elektrischen Widerstandes.

Gemäß einer anderen Weiterbildung der erfindungsgemäßen Anzeigeeinrichtung ist es von besonderem Vorteil, wenn die auf der Scheibe gebildete Schicht ein konduktives Polymer aufweist. Hierdurch ist die Heizvorrichtung mittels des leitfähigen Kunststoffs besonders einfach und kostengünstig herstellbar. Das konduktive Polymer ermöglicht dabei durch eine gleichmäßige Wärmeabstrahlung einen hohen Wirkungsgrad, ohne hierbei den Strahlengang des die Flüssigkristallzelle durchtretenden Lichtes nachhaltig zu stören.

Eine lediglich geringe Verminderung der Lichtintensität, so daß zur Beleuchtung der Flüssigkristallzelle eine übliche Lichtquelle mit niedriger Energieaufnahme verwendbar ist, erfolgt gemäß einer anderen vorteilhaften Weiterbildung der Erfindung dann, wenn das konduktive Polymer eine Lichttransmission von mindestens 90 % aufweist.

Wenn Flüssigkristallzellen mittels Durchlicht beleuchtet werden, ist ein Frontpolfilter und ein Rückpolfilter erforderlich. In solchen Fällen ist es sinnvoll, dass beide Trägerscheiben zur Wärmeentkoppelung jeweils unter Zwischenschaltung der Isolationsschicht einen Polfilter aufweisen.

Gemäß einer anderen vorteilhaften Weiterbildung der erfindungsgemäßen Anzeigeeinrichtung weist diese eine die Flüssigkristallzelle und eine optisch in Reihe zu der Flüssigkristallzelle angeordnete weitere Flüssigkristallzelle aufweisende DSTN (Double Super Twisted Nematic)-Zelle auf. Dabei kann die weitere Flüssigkristallzelle lediglich zur Farbkompensation als passive, d. h. nicht aktiv ansteuerbare, Zelle vorgesehen sein oder auch eine aktive, ansteuerbare Flüssigkristallzelle zur Informationsdarstellung sein. Mit einer DSTN-Zelle lässt sich der Anzeigekontrast erheblich verbessern.

Soll die weitere Flüssigkristallzelle lediglich als passive Zelle der Farbkompensation und damit einer guten und kontrastreichen Ablesbarkeit auch unter großen Blickwinkeln dienen, so ist die erfindungsgemäße Anzeigeeinrichtung vorteilhaft weiter vereinfacht, wenn sie eine die Flüssigkristallzelle und eine optisch in Reihe zu der Flüssigkristallzelle angeordnete Farbkompensationsfolie aufweisende FSTN (Foil Compensated Super Twisted Nematic) -Zelle besitzt. Diese Farbfehler korrigierende Kompensationsfolie (auch als Kompensationsfilm bezeichnet) kann unmittelbar an der Flüssigkristallzelle angeordnet sein oder - ohne Beeinträchtigung ihres optischen Effekts - einen Abstand von der Flüssigkristallzelle aufweisen. Dieses ist insbesondere dann vorteilhaft, wenn die Farbkompensationsfolie ein einziges Bauteil bildend mit dem Polfilter verbunden ist, somit einen Polfilter mit erweiterten, farbkompensierenden Eigenschaften darstellt und die Heizvorrichtung auf diese Weise auch zwischen dieser Polfilter-Farbkompensationsfolie und einer der Trägerscheiben der Flüssigkristallzelle anzuordnen ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: einen Schnitt durch eine erste Ausführungsform einer Flüssigkristallzelle einer Anzeigeeinrichtung nach der Erfindung,
- Fig. 2: einen Schnitt durch eine zweite Ausführungsform einer erfindungsgemäßen Flüssigkristallzelle einer Anzeigeeinrichtung.

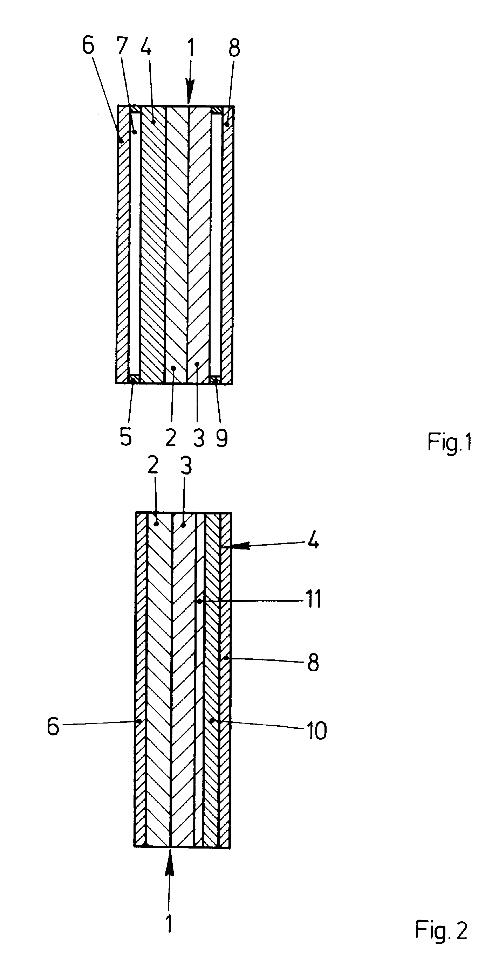

Die Figur 1 zeigt eine Flüssigkristallzelle 1, welche zwei übliche Trägerscheiben 2, 3 aufweist, zwischen denen (hier nicht dargestellt) in einem abgeschlossenen Zellenraum eine, in bekannter Weise mittels auf den Scheiben 2, 3 angeordneten Elektroden ansteuerbare, Flüssigkristallsubstanz vorhanden ist. Auf der einem Betrachter zugewandten vorderen Trägerscheibe 2 liegt eine Heizvorrichtung 4 auf, bei der es sich vorteilhaft um eine elektrisch leitende, einen elektrischen Widerstand aufweisende Beschichtung handeln kann. Ein auf der Heizvorrichtung 4 aufsitzender Rahmen 5 hält einen als Frontpolfilter dienenden Polfilter 6 mit Abstand zu der Heizvorrichtung 4, so dass zwischen der Heizvorrichtung 4 und dem Polfilter 6 eine dünne, thermische Isolationsschicht 7 vorhanden ist, die bei diesem Beispiel durch eine Luftschicht gebildet wird und verhindert, dass unerwünscht viel Wärme von der Heizvorrichtung 4 zum Polfilter 6 gelangen kann.

Auf der Rückseite der Flüssigkristallzelle 1 ist ebenfalls ein Polfilter 8 angeordnet, welcher durch einen Rahmen 9 Abstand von der rückseitigen Scheibe 3 hat. Der Polfilter 8 könnte aber auch unmittelbar an der rückseitigen Trägerscheibe 3 anliegen.

Bei der Ausführungsform nach Figur 2 ist als Isolationsschicht zwischen Heizung und Polfilter 8 eine Scheibe 10 aus Glas vorgesehen, welche auf ihrer der hinteren Trägerscheibe 3 zugewandten Seite eine elektrisch leitende Widerstandsschicht 11 aufweist, die die Heizvorrichtung 4 bildet. Auf diese Weise hat der Polfilter 8 ebenfalls Abstand von der Heizvorrichtung 4 und ist von dieser thermisch isoliert. Der zweite Polfilter 6 liegt bei der in Figur 2 gezeigten Ausführungsform unmittelbar auf der vorderen Trägerscheibe 2 auf. Da diese durch die Scheibe 3 Abstand von der Heizvorrichtung 4 hat, kommt es zu keiner unzulässig hohen Wärmebelastung des vorderen Polfilters 6.

## Patentansprüche

1. Anzeigeeinrichtung, insbesondere in einem Kraftfahrzeug, mit einer einen Polfilter aufweisenden Flüssigkristallzelle, die eine einem Betrachter zugewandte vordere und eine hintere Trägerscheibe sowie eine in einem Zellenraum zwischen den Trägerscheiben angeordnete Flüssigkristallsubstanz aufweist, und mit einer Heizvorrichtung zur Beheizung der Flüssigkristallzelle, **dadurch gekennzeichnet**, daß die Heizvorrichtung (4) außerhalb des Zellenraums und zwischen dem Polfilter (6; 8) und einer der Trägerscheiben (2; 3) angeordnet ist und daß der Polfilter (6; 8) mittels einer thermischen Isolationsschicht (7; 10) von der Heizvorrichtung (4) getrennt ist.

2. Anzeigeeinrichtung nach Anspruch 1, **dadurch gekennzeichnet,** daß die Isolationsschicht (7) transparent ist.

3. Anzeigeeinrichtung nach Anspruch 1 oder 2, **dadurch gekennzeichnet**, daß die Isolationsschicht (7) durch eine Luftschicht gebildet ist.

4. Anzeigeeinrichtung nach einem der vorangehenden Ansprüche, **dadurch gekennzeichnet**, daß der Polfilter (6) mit einem seitlichen Rahmen (5) auf der Heizvorrichtung (4) aufsitzt.

5. Anzeigeeinrichtung nach einem der vorangehenden Ansprüche, **dadurch gekennzeichnet**, daß die Isolationsschicht durch eine wärmeisolierende Scheibe (10) gebildet ist.

6. Anzeigeeinrichtung nach Anspruch 5, **dadurch gekennzeichnet**, daß die Heizvorrichtung (4) durch eine elektrisch leitende, der Trägerscheibe (3) zugewandte und einen elektrischen Widerstand aufweisende Schicht (11) auf der die Isolationsschicht bildenden, wärmeisolierenden Scheibe (10) gebildet ist.

7. Anzeigeeinrichtung nach Anspruch 6, **dadurch gekennzeichnet,** daß die auf der Scheibe (10) gebildete Schicht (11) ein konduktives Polymer aufweist.

8. Anzeigeeinrichtung nach Anspruch 7, **dadurch gekennzeichnet,** daß das konduktive Polymer eine Lichttransmission von mindestens 90 % aufweist.

9. Anzeigeeinrichtung nach einem der vorangehenden Ansprüche, **dadurch gekennzeichnet**, daß beide Trägerscheiben (2, 3) jeweils unter Zwischenschaltung der Isolationsschicht (7) einen Polfilter (6, 8) aufweisen.

10. Anzeigeeinrichtung nach einem der vorangehenden Ansprüche, **gekennzeichnet durch** eine die Flüssigkristallzelle (1) und eine optisch in Reihe zu der Flüssigkristallzelle (1) angeordnete weitere Flüssigkristallzelle aufweisende DSTN (Double Super Twisted Nematic) -Zelle.

11. Anzeigeeinrichtung nach einem der Ansprüche 1 bis 9, **gekennzeichnet durch** eine die Flüssigkristallzelle (1) und eine optisch in Reihe zu der Flüssigkristallzelle (1) angeordnete Farbkompensationsfolie aufweisende FSTN (Foil Compensated Super Twisted Nematic) -Zelle.
